# EUROPÄISCHE PATENTSCHRIFT

(11) **EP 3 661 723 B1**
(45) Veröffentlichungstag und Bekanntmachung des Hinweises auf die Patenterteilung: **03.08.2022**
(21) Anmeldenummer: 18750197.8
(22) Anmeldetag: 03.08.2018
(51) Int. Cl.: B29C 49/00, A61J 1/06, B65D 1/09, B29L 31/00, B29K 67/00

(54) **BLASFORM-, FÜLL- UND SCHLIESSVERFAHREN SOWIE DANACH HERGESTELLTES BEHÄLTERERZEUGNIS, INSBESONDERE AMPULLENERZEUGNIS**
METHOD OF BLOW MOULDING, FILLING AND CLOSING, AND CONTAINER PRODUCT, ESPECIALLY AMPOULE PRODUCT, PRODUCED THEREBY
PROCÉDÉ DE MOULAGE PAR SOUFFLAGE, DE REMPLISSAGE ET DE FERMETURE ET PRODUIT DE RÉCIPIENT FABRIQUÉ ENSUITE, EN PARTICULIER PRODUIT D'AMPOULE

(30) Priorität: 05.08.2017 DE 102017007443
(43) Veröffentlichungstag der Anmeldung: 10.06.2020
(73) Patentinhaber: kocher-plastik Maschinenbau GmbH, 74429 Sulzbach-Laufen (DE)
(72) Erfinder: SPALLEK, Michael, 55218 Ingelheim (DE); GESER, Johannes, 70839 Gerlingen (DE); GROH, Martin, 74405 Gaildorf (DE)
(74) Vertreter: Bartels und Partner, Patentanwälte
(86) Internationale Anmeldenummer: PCT/EP2018/071140
(87) Internationale Veröffentlichungsnummer: WO 2019/030142

(56) Entgegenhaltungen:
- EP-A1- 1 616 549
- EP-A1- 2 946 802
- EP-B1- 1 907 107
- EP-B1- 2 159 027
- CN-A- 105 517 909
- US-A- 4 926 915
- US-A- 4 979 630
- US-A- 5 723 189
- US-A1- 2012 201 921
- US-A1- 2017 137 203
- US-B2- 7 028 862
- DATABASE WPI Week 198715 Thomson Scientific, London, GB; AN 1987-104186 XP002786225, -& JP S62 50362 A (MITSUBISHI PLASTICS IND LTD) 5. März 1987 (1987-03-05)

## Beschreibung

Die Erfindung betrifft ein Blasform-, Füll- und Schließverfahren zum Herstellen eines befüllten und verschlossenen sowie lagerfähigen Behältererzeugnisses, insbesondere in Form eines Ampullenerzeugnisses, mit den Verfahrensschritten im Oberbegriff von Anspruch 1.

In der DE 10 2008 006 073 A1 ist ein sog. Blasform-, Füll- und Siegelverfahren (BFS-Verfahren) aufgezeigt, das weltweit eingeführt und der Fachwelt unter der Markenbezeichnung "bottelpack^{®}" einschlägig bekannt ist. Das dahingehende Verfahren eignet sich in besonderer Weise für die Herstellung befüllter Behälter für medizinische Zwecke, wozu auch Ampullen als Behälter für Augentropfen mit Füllvolumina von beispielsweise 0,1 ml bis 10 ml wie auch Ampullen für parenteral oder oral zu applizierende Liquida im Volumenbereich von typischerweise 0,5 ml bis 50 ml gehören. Übliche Taktraten für die Herstellung dahingehend befüllter und verschlossener BFS-Erzeugnisse liegen im Bereich von ca. 15 Sekunden und weniger.

Nach dem BFS-Verfahren hergestellte Trinkampullen aus Polyethylen niedriger Dichte als Kunststoffmaterial sind beispielhaft aus der EP 2 269 558 B1 bekannt. Die bekannte Kunststoffampulle weist einen Körperabschnitt auf, einen Mundabschnitt, welcher einen oberen Teil des Körperabschnitts ausgestaltet, sowie einen Kopfabschnitt, welcher über einen abtrennbaren Abschnitt kontinuierlich mit dem Mundabschnitt ausgebildet ist. Der obere Teil dieses Mundabschnitts weist dabei einen Durchmesser auf, der stärker als jener des Mundabschnitts verringert ist, um dergestalt einen Schulterabschnitt auszubilden, wobei das obere Ende dieses Schulterabschnitts über den abtrennbaren Abschnitt zu dem unteren Ende des Kopfabschnitts verläuft.

Neben Polyethylen niedriger Dichte als Kunststoffmaterial, das fachsprachlich auch mit LDPE für Low-Density-Poly-Ethylen bezeichnet ist, sind weitere für BFS-Verfahren geeignete Kunststoffmaterialien Polyolefine sowie Polyethylen-Kunststoffmaterialien hoher Dichte, die fachsprachlich mit HDPE für High-Density-Poly-Ethylen abgekürzt sind, und ferner Polypropylen einsetzbar sowie jeweils deren Blends und Copolymere. Bei all diesen erzeugten Kunststoff-Behältern respektive Ampullenerzeugnissen hat der Füllinhalt ausschließlich Kontakt zu einem Polymermaterial.

Bei Verwendung der vorstehend genannten und bekannten Kunststoffmaterialien im Rahmen von BFS-Herstellverfahren kann es allerdings, insbesondere beim Abfüllen empfindlicher Füllgüter, wie beispielsweise Wasser, zu organoleptischen Beeinträchtigungen, d.h. Geschmacks- und/oder Geruchsbeeinträchtigungen des Inhalts kommen, die allgemein auch mit Kunststoffgeschmack bezeichnet werden. Eine Erklärung könnte hierfür neben dem insbesondere bei Ampullen gegenüber Flaschenerzeugnissen sehr ungünstigen (d.h. geringem) Verhältnis von Füllvolumen zu innerer Kunststoffoberfläche sein, sowie dass beim BFS-Herstellverfahren unmittelbar vor dem Füllen der extrudierte, noch heiße Polymerschlauch durch ein Heißmesser durchtrennt wird und das Füllgut unmittelbar danach innerhalb weniger Sekunden in das insoweit noch heiße Polymererzeugnis eingefüllt wird, so dass dabei leicht eine organoleptische Veränderung des Füllgutes erfolgen kann. Dies dürfte auch erklären, warum mit zunehmender Extrusionstemperatur des jeweils eingesetzten üblichen Kunststoffs die organoleptische Beeinträchtigung in der Regel zunimmt. Beim BFS-Herstellverfahren, wie es beispielhaft in der bereits erwähnten DE 10 2008 006 073 A1 aber auch in der US 5 897 008 A beschrieben ist, stehen prinzipiell keine bereits fertig hergestellten Leerbehälter vor Füllgutaufnahme zur Verfügung, die man lange genug reinigen oder auslüften könnte, um den ungewollten Geschmacksübertritt zu verhindern, wie dies bei anderen Abfüllverfahren der Fall ist, wie sie beispielsweise für die Herstellung von marktüblichen Plastikgetränkeflaschen verwendet werden, die man den Blasverfahren zurechnen kann, wie Streckblasen oder Spritz-Streckblasen.

Gerade im Falle der Herstellung von BFS-Ampullenerzeugnissen, die typischerweise Behälter mit Füllvolumina von weniger als 50 ml darstellen, ist der Unterschied zu den im BFS-Verfahren hergestellten Flaschenerzeugnissen noch gravierender, da Ampullen im BFS-Herstellverfahren regelmäßig vakuumgeformt und demgemäß im eigentlichen Sinne nicht geblasen werden.

Um der unerwünschten Permeation von Stoffen in und/oder aus dem befüllten Behältnis zu begegnen, ist in der EP 1 616 549 B1 bereits ein Verfahren zur Herstellung einer Kunststoffampulle für ein flüssiges Arzneimittel aufgezeigt worden, welches die Schritte umfasst: Formgebung eines Behälterkörpers durch Halten eines röhrenförmigen, koextrudierten Blasrohlings zwischen unteren geteilten Formteilen und Bildung eines Hohlraums in dem Blasrohling, wobei der Blasrohling mindestens zwei Schichten zu umfassen hat, von denen mindestens eine Funktionsschicht mit mindestens einer technischen Eigenschaft versehen ist: Hierzu gehören beispielsweise die Fähigkeit zur Verhinderung von Gaspermeation, der Fähigkeit zur Verhinderung von Dampfpermeation, der Fähigkeit zur Verhinderung von Arzneimittelpermeation und der Fähigkeit zur Verhinderung von Arzneimittelabsorption/adsorption; allein verbessern derartig mehrschichtig aufgebaute BFS-Ampullen die organoleptische Neutralität nicht, da bei diesem Verfahren gleichfalls BFS-Polyolefine zum Einsatz kommen und organoleptisch bedenkliche Stoffe zum Beispiel über die Öffnung des Behälters vor dessen Befüllung über die Gasphase eingebracht werden können.

Die CN105517909A beschreibt ein Blasform-, Füll- und Schließverfahren gemäß dem Oberbegriff von Anspruch 1 zum Herstellen eines befüllten und verschlossenen sowie lagerfähigen Behältererzeugnisses, insbesondere in Form eines Ampullenerzeugnisses, das aus einem Kunststoffmaterial gebildet eine einschichtige Behälter- bzw. Ampullenwand aufweist und bei Ingebrauchnahme unter Freigeben mindestens einer Entnahmeöffnung die Entnahme, insbesondere für eine orale Verwendung des Erzeugnisinhalts, erlaubt, wobei das Aufnahmevolumen des Behältererzeugnisses für das aufzunehmende und zu bevorratende Füllgut, insbesondere in Form einer Flüssigkeit, weniger als 50 ml beträgt.

Ein Blasformverfahren wird in der JP S62-250362 und der US 2012/ 0201921 A1 aufgezeigt.

Behältererzeugnisse gehen aus der CN105517909A, der US 2017/0137203 A1, der EP 2 946 802 A1, der US 5 723 189, der US 7 028 862 B2, der US 4 979 630, der US 4 926 915 A und der EP 1 907 107 B1 hervor.

Pellets bestehend aus mehreren Kunststoffen werden in der EP 2 159 027 B1 beschrieben.

Ausgehend von diesem Stand der Technik liegt der Erfindung die Aufgabe zugrunde, Beeinträchtigungen des Erzeugnisinhalts, insbesondere in Form von organoleptischen Beeinträchtigungen, für im Blasform-, Füll- und Schließverfahren hergestellte Behältererzeugnisse, insbesondere Ampullenerzeugnisse, zu vermeiden.

Eine dahingehende Aufgabe löst ein Verfahren mit den Schritten des Patentanspruchs 1 in seiner Gesamtheit sowie ein danach hergestelltes Behältererzeugnis gemäß der Merkmalsausgestaltung des Patentanspruchs 6. Weitere vorteilhafte Ausführungsformen der erfindungsgemäßen Lösung sind Gegenstand der Unteransprüche.

Dadurch, dass gemäß dem kennzeichnenden Teil des Patentanspruchs 1 für das BFS-Verfahren geeignete Kunststoffmaterialien ausgewählt werden, die in Zusammenwirken mit dem Behälterinhalt vor und bei Ingebrauchnahme, insbesondere bei einer oralen Einnahme, organoleptisch neutral oder im Wesentlichen organoleptisch neutral sind und auch bei längerer Lagerdauer diese Neutralität erhalten bleibt; dass als Kunststoffmaterialien für die herzustellenden Erzeugnisse aromatische Polyesterpolymere und/oder Polyestercopolymere und/oder Blends dieser Materialien verwendet werden; und dass als jeweiliges aromatisches Polyesterpolymer zumindest teilweise ein Polyethylenfuranoat (PEF) oder ein Polyethylenterephthalat (PET) sowie jeweils deren Copolymere und/oder Blends verwendet wird, ist erreicht, dass der Erzeugnisinhalt respektive das Füllgut nicht vom im Herstellverfahren eingesetzten Kunststoffmaterial organoleptisch nachteilig beeinflusst wird. Insbesondere kommt es zumindest zu einer Minimierung der Geschmacksbeeinträchtigung auch im Falle wässriger Füllgüter, so dass selbst geschulte Geschmacksprüfer den sog. Kunststoffgeschmack in relevantem Umfang nicht feststellen können. Die Angabe "Kunststoffgeschmack" schließt hier auch die sensorische Prüfung auf Kunststoffgeruch mit ein, der ebenfalls nicht oder nur in geringem Maße von den geschulten Geschmacksprüfern festgestellt werden konnte.

Selbst bei längerer Lagerdauer von befüllten und verschlossenen Behälterund Ampullenerzeugnissen bleibt die Geschmacksneutralität im Wesentlichen erhalten. Es ist für einen Durchschnittsfachmann auf dem Gebiet der BFS-Technologie überraschend, dass durch den Einsatz von ausgewählten aromatischen Polyesterpolymeren eine Stoffübertragung vonseiten des Kunststoffmaterials auf das bevorratete Füllgut mit Beeinträchtigung der Organoleptik unterbleibt, obwohl es im Gegensatz zu bekannten Herstellverfahren, wie dem Streckblasverfahren, beim BFS-Verfahren gerade nicht zu einer permeationsmindernden Ausrichtung, sprich Verstreckung von Polymerketten, im Herstellprozess kommen kann.

Obwohl die Schmelz- und Extrusionstemperaturen für die erfindungsgemäß zu verwendenden aromatischen Polyesterpolymere mit 250 °C bis 280 °C deutlich oberhalb der Verarbeitungstemperaturen von üblicherweise verwendeten BFS-Polyolefinen liegen, die typischerweise im Bereich von 160 °C bis 210 °C liegen, kommt es zu einer verminderten organoleptischen Beeinträchtigung, wozu auch die relativ hohen intrinsischen Materialviskositäten (zwischen 0,6 dl/g bis 1,7 dl/g gemessen in Anlehnung an ASTM D4603) der erfindungsgemäßen aromatischen Polyester mit beitragen.

Überdies hat es sich als sehr günstig erwiesen, für den Wassergehalt des einzusetzenden Kunststoffgranulats unmittelbar vor der Extrusion im Rahmen des BFS-Herstellverfahrens für spezifisch ausgewählte aromatische Polyesterpolymere Werte weniger als 50 ppm, vorzugsweise weniger als 30 ppm, auszuwählen. Hierdurch wird insbesondere die organoleptische Veränderung im Rahmen der Lagerzeit des befüllten und verschlossenen Behältnisses auf ein Minimum beschränkt.

Ein weiterer Vorteil des erfindungsgemäßen BFS-Verfahrens ist seine Umweltfreundlichkeit, als die eingesetzten aromatischen Polyesterpolymere mit 10 % bis 80 %, vorzugsweise 30 % bis 60 %, Regenerat versetzt werden können.

Erfindungsgemäß kommen folgende spezifische aromatische Polyesterpolymere für das BFS-Verfahren zum Einsatz:
- Polyethylennaphthalat (PEN),
- Polybutenterephthalat (PBT), bevorzugt jedoch
- glykolmodifiziertes Polyethylenterephthalat (PETG), und
- Copolyester, die mit Terephthalsäure hergestellt wurden
sowie jeweils deren Copolymere und/oder Blends.

Ferner ist es vorteilhaft, wenn der Öffnungsquerschnitt, der bei einem Abtrennen eines Kopfteils vom sonstigen Erzeugniskörper unter Freigabe der jeweiligen Entnahmeöffnung freigelegt wird, weniger als 25 mm², bevorzugt weniger als 10 mm² beträgt. Insoweit wird auch vermutet, dass dieser verringerte Querschnitt dazu beiträgt, dass, wenn überhaupt, dann nur sehr wenige organoleptisch bedenkliche Stoffe ins Füllgut oder den Gasraum der Ampulle gelangen können.

Insbesondere zur leichten Handhabung ist es ferner vorteilhaft, die Ampullen so zu gestalten, dass die durchschnittliche Wandstärke im Bereich des Erzeugniskörpers, der für die Aufnahme des jeweiligen Füllguts bestimmt ist, 0,2 mm bis 0,9 mm, vorzugsweise 0,4 mm bis 0,6 mm beträgt, und dass die durchschnittliche Wandstärke an und im Bereich der Trenn- oder Sollbruchstelle unter Bildung des jeweiligen Öffnungsquerschnitts weniger als 0,5 mm, bevorzugt weniger als 0,3 mm, beträgt.

Durch die Verwendung der eingesetzten aromatischen Polyesterpolymere lässt sich des Weiteren in vorteilhafter Weise eine Erzeugniswand mit hoher Transparenz erhalten, die eine optische Begutachtung des Erzeugnisinhalts ermöglicht, ohne dass beim BFS-Verfahren - wie oben bereits erläutert - eine physikalische Veränderung durch Verstreckung der Polymerketten stattfindet.

Dadurch, dass die erfindungsgemäß hergestellten Ampullenerzeugnisse eine hohe Transparenz aufweisen, lässt sich ihr Inhalt auf Veränderungen, beispielsweise in Form von Trübungen oder Verunreinigungen, leicht inspizieren. Dies ist bei klassischen BFS-Polyolefinen, wie Polypropylen, nur durch die Verwendung von die Transparenz erhöhenden Zusatzstoffen im Kunststoffmaterial und im Übrigen auch dann nur teilweise erreichbar. Solche Zusatzstoffe, die fachsprachlich mit "Clarifier" bezeichnet sind, sind jedoch für medizinische Anwendungen nachteilig, weil deren Bestandteile leicht in den Behälterinhalt übergehen können, was in den meisten Fällen nicht den organoleptischen und/oder medizinischen Anforderungen entspricht.

Im Folgenden wird das erfindungsgemäße Verfahren anhand von verschiedenen Ampullenerzeugnissen nach der Zeichnung näher erläutert. Dabei zeigen in prinzipieller und nicht maßstäblicher Darstellung die
- Fig. 1: eine seitliche Draufsicht auf ein Ampullenerzeugnis;
- Fig. 2: eine seitliche Darstellung des Ampullenerzeugnisses nach der Fig. 1, das insoweit um 90° um seine Längs- oder Hochachse gedreht ist;
- Fig. 3a, 3b: einmal in stirnseitiger Ansicht, einmal in Seitenansicht ein weiteres Ausführungsbeispiel für ein Ampullenerzeugnis mit zwei Abgabeöffnungen;
- Fig. 4: in perspektivischer Darstellung eine Ansicht von oben auf ein weiteres Ausführungsbeispiel eines Ampullenerzeugnisses;
- Fig. 5: einen vergrößert und unvollständig dargestellten Längsschnitt eines weiteren Ausführungsbeispiels einer Ampulle mit einer in den Ampullenhals eingeführten Luer-Konus-Spritze; und
- Fig. 6: einen entsprechend vergrößert dargestellten Schnitt nach der Linie VI-VI in Fig. 5.

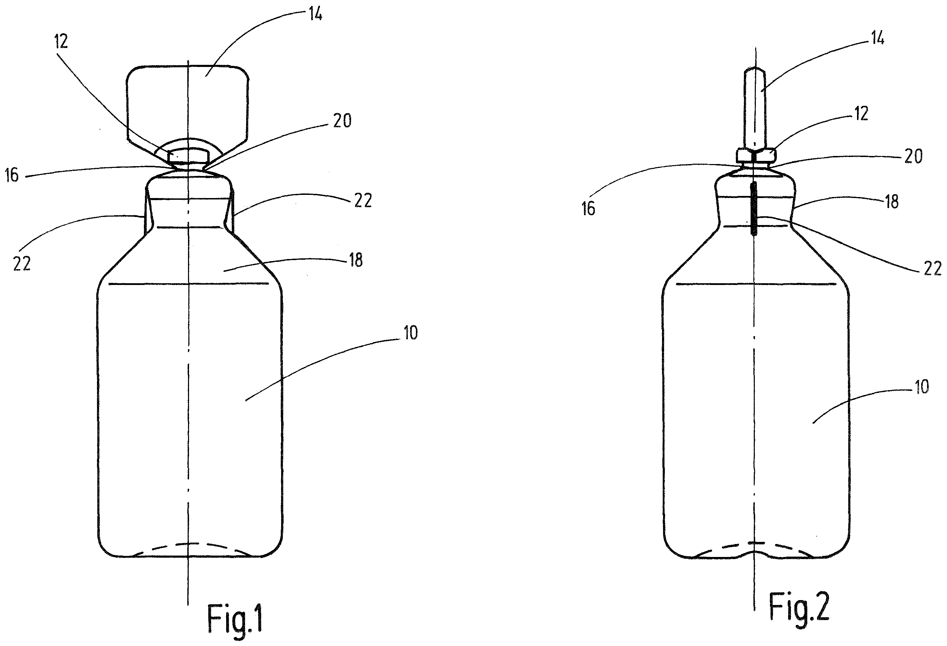

Das in den Fig. 1 und 2 dargestellte Ampullenerzeugnis ist nach dem bottelpack^{®}-Verfahren hergestellt, bei dem in einer Arbeitsstation das Ampullenerzeugnis vakuumgeformt, befüllt und verschlossen wird. In der Regel werden solche Ampullenerzeugnisse im Rahmen eines sog. Ampullenblocks hergestellt, bei dem mehrere Behälter miteinander in einer Reihe verbunden sind.

Die in den Figuren dargestellte Ampulle weist einen Ampullen- oder Erzeugniskörper 10 auf, in dem ein Abgabemedium der Ampulle bevorratet ist. Im vorliegenden Fall ist das Abgabemedium ein salzarmes, stilles Mineralwasser, um potentielle Geschmacksveränderungen möglichst leicht nachweisen zu können. Die Füllmenge des Abgabemediums im Erzeugniskörper 10 beträgt etwa 10 ml. Zur Herstellung dieser 10 ml-Ampulle wurde eine bekannte BFS-Maschine der Firma Rommelag vom Typ Bottelpack 321 verwendet.

Des Weiteren weist die Ampulle ein Kopfteil 12 auf, das mittels eines Knebelstücks 14 vom Verwender vom Ampullenkörper 10 abdrehbar ist, wobei an der Oberseite des Ampullenkörpers 10 dergestalt eine Entnahmeöffnung 16 unter Bildung eines Öffnungsquerschnitts freigebbar ist, über die der Ampulleninhalt entnommen werden kann. Wie die Figuren weiter zeigen, verjüngt sich der ansonsten zylindrisch ausgestaltete Ampullenkörper 10 in Richtung eines Halsteils 18, das im ungeöffneten Zustand der Ampulle eine Verbindung herstellt zwischen dem Ampullenkörper 10 und dem Kopfteil 12 mit dem Knebelstück 14. Um ein leichteres Abtrennen des Kopfteils 12 über das Knebelstück 14 zu ermöglichen, ist zwischen dem genannten Verbindungshalsteil 18 und dem Kopfteil 12 in die Ampulle eine Trenn- oder Sollbruchstelle 20 eingebracht. Zur Aussteifung des Halsteils 18 können Versteifungsstege 22 dienen, die im Rahmen des bottelpack^{®}-Herstellverfahrens angeformt sind. Der dahingehende Aufbau einer Ampulle ist hinreichend bekannt, so dass an dieser Stelle hierauf nicht mehr näher eingegangen wird.

Als Kunststoffmaterial zur Herstellung des Ampullenerzeugnisses nach den Fig. 1 und 2 wurden folgende aromatische Polyester eingesetzt, wobei Details zu Hersteller und/oder Handelsnamen in Klammern angegeben sind:
- Polyethylenterephthalat (Traytuf 9506, M&G Gruppo Mossi & Ghisolfi);
- Polyethylenterephthalat-Copolyester (Polyclear^{®} EBM PET 5505, Invista);
- Polyethylennaphthalat-Polyethylenterephthalat-Blend (Hipertuf 85032, Shell Chemicals);
- Polyethylenfuranoat (PEF, Avantium);
- Copolyester, die mit Terephthalsäure hergestellt wurden (Tritan Copolyester MX810, Eastman);
- Polybutenterephthalat (Pocan 1501, Lanxess); oder
- Polyethylenterephthalat-Glykol (MB002, Eastman; S2008, SK Chemicals).

Unter Einsatz der vorstehend genannten aromatischen Polyestermaterialien wurden Ampullen erhalten, die eine glasartige Transparenz und einen Oberflächenglanz aufweisen, die mit automatischen Inspektionsanlagen, wie auch mit dem menschlichen Auge, deutlich besser zu prüfen sind als hergestellte Ampullen gleicher Geometrie und Wandstärke aus den bekannten Materialien Polypropylen oder Polyethylen geringer Dichte (LDPE). Eine automatische Inspektionsanlage ist beispielsweise in der DE 10 2014 006 835 A1 der Schutzrechtsinhaberin beschrieben.

Die in den Fig. 1 und 2 gezeigte Ampulle ist auch als Behälter für nicht oral, enteral, oder nasal zu verabreichende Füllgüter geeignet, wie z.B. Augentropfen, Injektions- oder Inhalationslösungen, Suspensionen und dergleichen mehr, bei denen regelmäßig die Inspektion der befüllten und verschlossenen Behälter wichtig, teilweise sogar vorgeschrieben ist.

Trotz der gegenüber den Standard BFS-Polyolefinen (LDPE, HDPE, PP) an sich "besseren" mechanischen Eigenschaften (ISO 527-1-2) der erfindungsgemäßen BFS-Polyester mit typischerweise hohen Zugfestigkeiten von über 80 MPa und hohem Zug-E-Modul von über 2000 MPa lassen sich die erfindungsgemäßen Ampullen recht einfach öffnen. Deren Öffnungs-Drehmomente betragen durchschnittlich 40 Ncm bis 55 Ncm, gemessen mit einem Drehmomentmessgerät Vortex-i der Fa. Mecmesin bei einer Drehgeschwindigkeit von 20/min. Solche Drehmomente lassen sich von Jugendlichen und Erwachsenen ohne Weiteres aufbringen, so dass sich die erfindungsgemäßen Ampullen insbesondere für Einzeldosen oral, enteral, sublingual oder topisch, beispielsweise in der Mundhöhle, anzuwendender Präparate, wie Arzeimittel, Medizinprodukte, Nahrungs-Ergänzungsmittel, Stärkungsmittel, Vitamine, Homöopathika, etc., eignen.

Die schnelle Entnahme des Füllgutes durch Ausdrücken, beispielsweise zum Auftragen einer Lösung oder Emulsion auf die Zunge, wird wesentlich erleichtert, wenn ein Druckausgleich im Behälter über eine zusätzliche Öffnung möglich ist. Dies kann erfindungsgemäß erreicht werden, indem beim Öffnen der Ampulle mindestens zwei Öffnungen freigegeben werden.

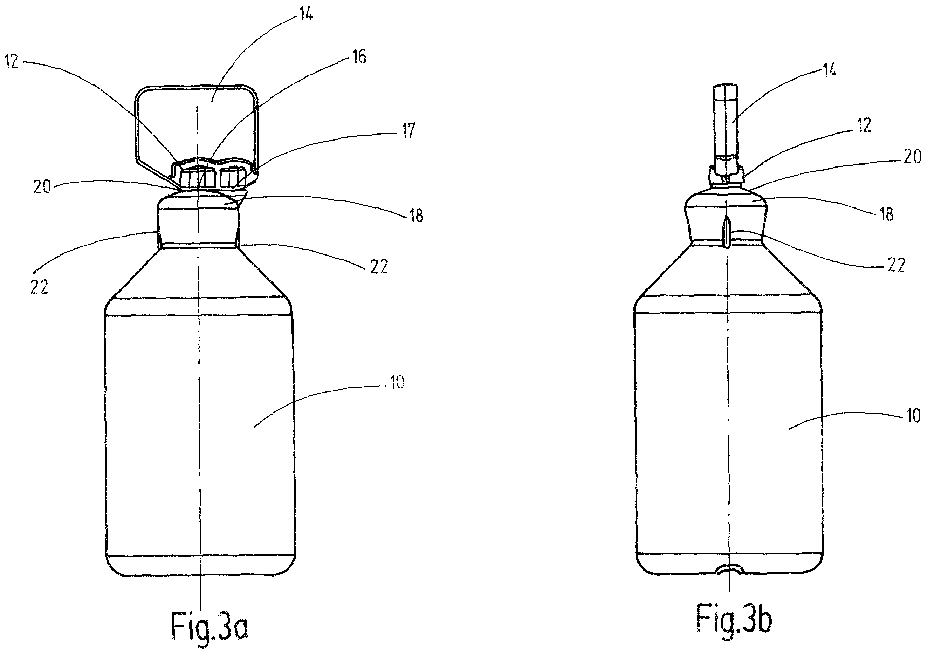

So zeigen die Fig. 3a und 3b ein dahingehendes Ausführungsbeispiel einer Ampulle mit zwei Entnahmeöffnungen 16, 17, wobei die größere Entnahmeöffnung 16 beispielsweise einen Durchmesser von 2 mm hat, wohingegen die kleinere Öffnung 17 einen solchen von ca. 1 mm aufweist. Die beiden Entnahmeöffnungen 16, 17 werden gleichzeitig freigegeben, sofern das Kopfteil 12 mittels des Knebelstückes 14 in bekannter Weise vom Halsteil 18 über die jeweils zuordenbare Trenn- oder Sollbruchstelle vom sonstigen Ampullen- oder Erzeugniskörper 10 abgedreht ist. Auch kann diese Ampullenlösung wiederum mit paarweisen Versteifungsstegen 22 versehen sein. Bis auf die genannten beiden Entnahmeöffnungen 16, 17 gleicht der Behälter nach den Fig. 3a und 3b weitestgehend der Lösung nach den Fig. 1 und 2. Durch das zeitgleiche Öffnen des Ampullenkörpers 10 über die jeweilige Sollbruchstelle, die auch als gemeinsame Sollbruchstelle 20 ausgebildet sein kann, erfolgt unter Freigabe der beiden Entnahmeöffnungen 16, 17 durch die hierdurch einhergehende verbesserte Belüftung ein schnelleres Entleeren des Ampullenerzeugnisses.

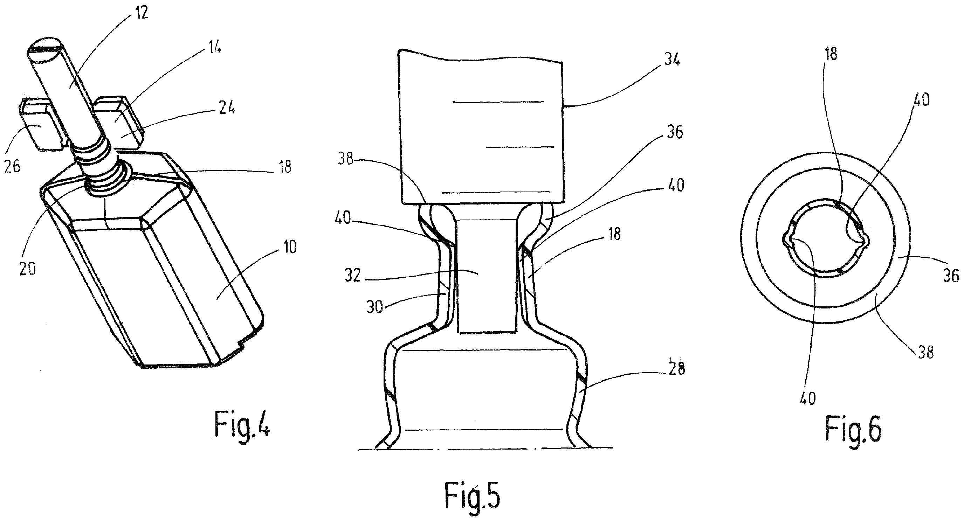

Die dosierte Entnahme des Füllgutes, beispielsweise das Ausdrücken einzelner Tropfen, wird wesentlich erleichtert, wenn der Ampullenkörper 10 keinen im Wesentlichen kreisrunden, sondern bevorzugt einen ovalen, rautenförmigen oder sechseckigen Querschnitt aufweist. So zeigt der Ampullenkörper 10 nach der Fig. 4 einen solchen sechseckigen Querschnitt 10 auf. Auch bei dieser Ampullenversion lässt sich das Kopfteil 12 mittels des Knebelstücks 14, diesmal in Form von zwei Handhaben 24, 26, vom Halsteil 18 des Ampullenkörpers 10 entlang der Trenn- oder Sollbruchstelle 20 entfernen. In den Ampullenkörper 10 kann in an sich bekannter Weise eine Spritzennadel (nicht dargestellt) eingelegt und fixiert sein, deren Ende für einen Anwendungsvorgang nach Abnahme des Kopfteils 12 dann freigelegt ist.

Die Entnahme des Füllgutes, beispielsweise das Aussaugen mit Hilfe eines durch die Entnahmeöffnung 16 eingeführten Trinkhalmes, wird wesentlich erleichtert, wenn ein Druckausgleich im Behälter während der Entnahme möglich ist. Dies kann erfindungsgemäß erreicht werden, indem die Entnahmeöffnung 16 so gestaltet ist, dass sich ein Öffnungsquerschnitt ergibt, der nicht kreisrund - beispielsweise oval - ist und somit zur Außenfläche des Trinkhalms nicht abdichten kann.

Die nahezu vollständige Entnahme des Füllgutes mithilfe der Kegelverbindung einer Spritze, beispielsweise zur oralen (Nicht-Luer-6 %-Verbindungsstücke, Oral-Tip, EN ISO 80369-3:2016) oder dentalen (6 %-Luer-Kegel gemäß EN 1707:1996 und EN 20594-1:1993) Applikation, wird ebenfalls erleichtert, wenn die Entnahmeöffnung 16 einen Druckausgleich im Behälter während der Entnahme ermöglicht. Dies kann erfindungsgemäß erreicht werden, indem die Geometrie der Entnahmeöffnung 16 von der der jeweilig zu verwendeten Kegelverbindung nur geringfügig abweicht. Dies kann beispielsweise durch mindestens einen Längskanal zur Belüftung realisiert werden, der jedoch nur so klein/tief ist, dass es nicht zum Austritt von Flüssigkeit bei der Überkopfentnahme kommen kann. Bevorzugt liegt mindestens ein Belüftungskanal in der Formtrennebene des Behälters und hat einen bevorzugten Kanalquerschnitt, der dem eines abgerundeten Dreiecks entspricht.

Eine solche Belüftungskammerlösung ist in den Fig. 5 und 6 gezeigt. An das dem Boden gegenüberliegende Ende des Ampullenkörpers 10 schließt sich ein erster Abschnitt 28 des Halsteils 18 an, dessen Durchmesser durch konische Verjüngung des Ampullenkörpers 10 auf seiner Oberseite kleiner ist als der vorzugsweise zylindrische Durchmesser des Ampullenkörpers 10 selbst. Auf diesen Abschnitt 28 folgt ein im Durchmesser kleinerer, zylindrischer Abschnitt 30, dessen Innendurchmesser etwas kleiner als der größte Durchmesser des Luer-Konus 32 einer dahingehenden Spritze 34, aber etwas größer als dessen kleinster Durchmesser gewählt ist. Dadurch ist zwischen eingeführtem Luer-Konus 32 und der Innenwandung des Halsteils 18 im Bereich des Abschnitts 30 eine in sich geschlossene, linienförmige Anlage erreicht, und zwar entlang einer Querschnittsebene, wie sie in der Fig. 6 beispielhaft dargestellt ist, welche den Durchtritt von Flüssigkeit verhindert, jedoch den Durchtritt von Luft erlaubt. An den Abschnitt 30 des Halsteils 18 schließt sich bei der vorliegenden Ausführungsform eines Ampullenkörpers 10 ein überstehender ringwulstartiger Abschnitt 36 an, dessen axiale Länge derart gewählt ist, dass der Luer-Konus 32 mit dem erforderlichen, jedoch relativ geringen Anpressdruck, welcher notwendig ist, um einen Durchtritt von Flüssigkeit zu verhindern, an der Innenwand des zylindrischen Abschnitts 30 des Halsteils 18 anliegt, wenn die den Luer-Konus 32 tragende Stirnfläche des Spritzenkörpers der Spritze 34 an der freien Stirnfläche 38 des Halsteils 18 anliegt. Die an den Ampullenkörper 10 angedockte Spritze 34 weist als Spritzenende vorzugsweise einen 9 %-Luer-Konus 32 auf. Insbesondere das Ampullenerzeugnis 10 nach den Fig. 1 und 2 sowie den Fig. 3a und 3b kann vergleichbar der Entnahme des Erzeugnisinhalts über eine geeignete Luer-Konus-Spritze 34 verwendet werden.

Um den Durchtritt von Luft zwischen dem Luer-Konus 32 und dem Halsteil 18 im Bereich des weiteren Abschnitts 30 zu verbessern, ist dieser Abschnitt 30 an zwei zur Längsachse des Ampullenerzeugnisses 10 diametral angeordneten Stellen mit einem Belüftungskanal 40 versehen in Form je einer nach innen offenen Längsnut, deren Querschnitt vorzugsweise in Form eines abgerundeten Dreiecks (vgl. Fig. 6) derart gewählt ist, dass die einströmende Luft einen Flüssigkeitsaustritt verhindert. Es braucht nur ein einziger Belüftungskanal 40 vorhanden zu sein, um die gewünschte Belüftung zu erreichen; gegebenenfalls ist dann der Querschnitt des Kanals 40 entsprechend zu vergrößern. Bei nur einem Belüftungskanal 40 legt sich der Außenumfang des Luer-Konus 32 außermittig an die sonstigen Wandteile des Abschnitts 30 des Halsteils 18 an. Ferner wird aus fertigungstechnischen Gründen heraus in vorteilhafter Weise der parallel zur Längsachse der Ampulle verlaufende, jeweilige Belüftungskanal 40 in die Ebene der Formhälften gelegt, die in dieser Ebene zusammengebracht die Formgebung der Ampulle ermöglichen.

Bei einer weiteren, nicht näher dargestellten Ausführungsform für eine Ampulle aus Kunststoff mit einem Behälterteil zur Aufnahme eines vorgebbaren Fluids, das mit einem von einem Kopfteil verschließbaren Halsteil versehen ist, das eine kanalartige Eintrittsstelle für Luft in das Innere des Behälterteils aufweist, kann für eine wirksame Belüftung auch vorgesehen sein, dass die genannte Eintrittsstelle für Luft aus mindestens einem Ringkanal besteht, der zumindest teilweise außen- und/oder innenumfangsseitig am Halsteil angeordnet ist, was eine raschere Entnahme des Behälterinhalts mittels des Spritzen- oder Kanülenkörpers ermöglicht.

Sollte eine Wiederverschließbarkeit der Ampullen gewünscht sein, so ist dies durch Einbringen entsprechender Zusatzkomponenten vor dem Verschließen der Ampulle möglich. Detailliert ist dies in DE 10 2007 007 474 B3 (Hansen) am Beispiel eines zweiteiligen Tropfereinsatzes beschrieben.

Die intrinsische Viskosität der eingesetzten aromatischen Polyesterpolymere, gemessen in Anlehnung an ASTM D4603, liegt bevorzugt im Bereich von 0,6 dl/g bis 1,7 dl/g, besonders bevorzugt 0,8 dl/g bis 1,5 dl/g.

Im Falle von Polyethylenterephthalat, Polyethylenterephthalat-Glykol nebst zugehörigen Blends und Copolymeren, wird eine intrinsische Viskosität von mehr als 0,8 dl/g bevorzugt.

Ferner hat es sich als günstig erwiesen, insbesondere im Falle des Einsatzes von Polyethylenterephthalat oder Polyethylenfuranoat den Wassergehalt des Granulats unmittelbar vor der Extrusion nicht größer als 50 ppm zu wählen, bevorzugt einen Wassergehalt von weniger als 30 ppm vorzusehen.

Die durchschnittliche Wandstärke des Ampullenkörpers 10 im Bereich der Trenn- oder Sollbruchstelle 20 soll weniger als 0,45 mm, bevorzugt weniger als 0,3 mm, betragen. Die durchschnittliche Wandstärke der Ampulle im Bereich des Ampullenkörpers 10 soll zwischen 0,2 mm bis 0,9 mm betragen, bevorzugt jedoch 0,3 mm bis 0,7 mm sein. Die Ampulle weist einen geringen Öffnungsquerschnitt von weniger als 25 mm², bevorzugt weniger als 10 mm² auf.

Bei Einhaltung der oben beschriebenen erfindungsgemäßen Kriterien ist eine Minimierung der organoleptischen Beeinträchtigung im Falle wässriger Füllgüter erreicht, was überraschend ist, da die Schmelz- und Extrusionstemperaturen der erfindungsgemäß einzusetzenden aromatischen Polyesterpolymere im Bereich von 250 °C bis 280 °C deutlich oberhalb der üblicherweise im Rahmen des BFS-Herstellverfahrens eingesetzten Polyolefine liegen, deren Verarbeitungstemperatur typischerweise im Bereich von 160 °C bis 210 °C liegt.

Ein weiterer Vorteil der erfindungsgemäßen Ampullen ist die Möglichkeit recyceltes Kunststoffmaterial einsetzen zu können. So können 10 bis 80 %, bevorzugt 30 bis 60 %, Regenerat dem originären aromatischen Polyesterpolymer im Rahmen der Herstellung zugesetzt werden.

Zur Prüfung der organoleptischen Eigenschaften wurde eine sensorische Prüfung in Anlehnung an die Norm DIN 10955:2004-06 durchgeführt. Zweck der Prüfung ist es, festzustellen, ob das eingesetzte BFS-Polymer im Rahmen des aufgezeigten BFS-Herstellprozesses zu einer Geruchs- oder Geschmacksveränderung der Prüfsubstanz in Form von stillem, salzarmem Mineralwasser führt. Die Prüfung erfasst sensorisch wirksame Stoffe, die unter definierten Bedingungen aus dem Prüfmaterial entweder in den Luftraum (Geruchsprüfung) oder in die Prüfsubstanz übergehen (Geschmacksprüfung). Dabei hat sich herausgestellt, dass bei Verwendung von aromatischen Polyestermaterialien im Umfang des eingesetzten BFS-Verfahrens nur geringe Geschmacksveränderungen des Testwassers von den geschulten Geschmacksprüfern überhaupt nachweisbar waren, und dass die Ampullen, hergestellt aus aromatischen Polyesterpolymeren, denen aus bekannten BFS-Polyolefinen deutlich überlegen waren.

Die Verwendung von polyethylenfuranoathaltigen Polymeren ist gegenüber der Verwendung von bekannten polyethylenbasierten Kunststoffen deutlich vorteilhaft. So ermöglicht sie eine aus mikrobiologischen Aspekten bevorzugte Heißabfüllung oder eine Wärmebehandlung des verschlossenen Behälters zur Stabilisierung hochkonzentrierter Lösungen, die zur Kristallisation neigen.

Nachstehend werden Ausführungsbeispiele wiedergegeben:
Es wurde eine BFS-Maschine der Fa. Rommelag, Waiblingen, Deutschland vom Typ Bottelpack 321 verwendet. Hiermit wurden Ampullen gemäß Abbildung 1, 3 und 4 mit einem Behältervolumen von etwa 10 ml hergestellt, die Ampullen wurden mit 5-10 ml mineral- und geschmacksarmem stillem Wasser befüllt. Das stille Wasser wurde in Glasflaschen angeliefert. Als Polymermaterial wurde - siehe Versuchsnummer 1 - ein PET der Firma M&G Chemicals (Gruppo Mossi & Ghisolfi); Typenbezeichnung Traytuf 9506 verwendet. Mithilfe eines Molekularsiebtrockners der Firma Digicolor wurde das Granulat auf einen Wassergehalt von 36 ppm (Mittelwert aus 3 Proben) 10 Stunden bei 120 °C und einem Lufttaupunkt von unter minus 30 °C getrocknet und vor Feuchtigkeit geschützt dem Extruder der BFS Anlage zugeführt. Die intrinsische Viskosität des getrockneten Polymers wurde in Anlehnung an ASTM D4603 gemessen und betrug 0,94 dl/g. Die Extrusionstemperatur bei der Ampullenherstellung betrug 252 °C; der Massedruck 262 bar.

In analoger Weise (siehe Versuchsnummern 2 ff.) wurden mit weiteren Polymeren Ampullen unterschiedlicher Geometrie und Füllmenge auf verschiedenen BFS Anlagen hergestellt. Als Referenz zum Stand der Technik (siehe Versuchsnummern Ref-a bis Ref-c) wurden Polystyrol (PS) und beispielhaft für die beiden BFS-Polyolefine Polypropylen (Purell RP 270G der Firma LyondellBasell) sowie Polyethylen niedriger Dichte, LDPE, (Purell 3020D der Firma LyondellBasell) verwendet.

Die Details aller Versuche sind in folgender Tabelle zusammengefasst:

| Versuchs Nr | Ampulle | Füll Volumen | Polymer | Type | Hersteller | Trocknung | Rest Feuchte | intrinsische Viskosität | Melt volume rate | Masse Druck | MasseTemperatur | Organolept. Veränderung |
|---|---|---|---|---|---|---|---|---|---|---|---|---|
| | gemäß Fip | ml | | | | | ppm | dl/g | cm³/10min | bar | °C | |
| | | | | | | | | | | | | |
| 1 | 1 | 10 | PET | Traytuf 9506 | M&G Chemicals | 10h bei 120°C | 38 | 0,94 | n.a. | 262 | 252 | sehr gering |
| 2 | 1 | 8 | PEF | PEF | Avantium | 18h bei 150°C | 34 | 0,88 | n.a. | 258 | 256 | sehr gering |
| 3 | 3 | 8 | PBT | Pocan B1501 | Lanxess | 6h bei 125°C | 95 | na | 16* | 251 | 252 | gering |
| 4 | 3 | 5 | PETG | MB002 | Eastman | 12h bei 60°C | 190 | 0,85 | n.a. | 237 | 220 | sehr gering |
| 5 | 4 | 10 | PETG | S2008 | SK Chemicals | 6h bei 55°C | 300 | 1,2 | n.a. | 222 | 195 | sehr gering |
| 6 | 4 | 5 | PET-Copolyester | MX810 | Eastman | 6h bei 87°C | 200 | 1,1 | n.a. | 260 | 205 | gering |
| 7 | 1 | 8 | PET-Copolyester | Polyclear 5505 | Invista | 10h bei 120°C | 50 | 1,01 | n.a. | 285 | 251 | sehr gering |
| | | | | | | | | | Melt flow rate | | | |
| | | | | | | | | | g/10 min | | | |
| Ref-a | 1 | 10 | LDPE | Purell 3020D | Lyondellbasell | keine | n a | n a | 0,3** | 205 | 179 | hoch |
| Ref-b | 3 | 10 | PP | RP270G | Lyondellbasell | keine | n.a. | n.a. | 1,8*** | 200 | 186 | sehr hoch |
| | | | | | | | | | Melt volume rate | | | |
| | | | | | | | | | cm³/10min | | | |
| Ref-c | 4 | 10 | PS | PS 486N | Styrolution | keine | n.a. | n.a. | 4**** | 91 | 189 | sehr hoch |
| | | | | | | | | | | | | |
| | | | | | | | | * 250°C/2, 16kg | | | | |
| | | | | | | | | ** 190°C/2, 16 kg | | | | |
| | | | | | | | | *** 230°C/2,16 kg | | | | |
| | | | | | | | | **** 200°C/5kg | | | | |

Es wurde eine sensorische Prüfung in Anlehnung an die Norm DIN 10955:2004-06 durchgeführt. Zweck der Prüfung war es, festzustellen, ob das verwendete BFS-Polymer/der BFS-Prozess zu einer Geruchs- oder Geschmacksveränderung der Prüfsubstanz (stilles, salzarmes Mineralwasser) kommt. Die Prüfung erfasst sensorisch wirksame Stoffe, die unter definierten Bedingungen aus dem Prüfmaterial entweder in den Luftraum (Geruchsprüfung) oder über den Luftraum oder bei direkter Berührung in die Prüfsubstanz übergehen (Geschmacksprüfung). Die Ergebnisse, die Organoleptische Veränderung gegenüber dem Ausgangswasser, sind in obiger Tabelle enthalten.

Überraschenderweise hat sich herausgestellt, dass bei den aromatischen Polyestermaterialien nur geringe Geschmacksveränderungen des Testwassers von den geschulten Geschmacksprüfern nachweisbar waren, und Ampullen aus den Materialien PEF, PET sowie dem Co-Polyester denen aus den Referenzmaterialien (PS, PP und LDPE) deutlich überlegen waren.

## Patentansprüche

1. Blasform-, Füll- und Schließverfahren zum Herstellen eines befüllten und verschlossenen sowie lagerfähigen Behältererzeugnisses, insbesondere in Form eines Ampullenerzeugnisses, das aus einem Kunststoffmaterial gebildet eine einschichtige Behälter- bzw. Ampullenwand aufweist und bei Ingebrauchnahme unter Freigeben mindestens einer Entnahmeöffnung die Entnahme, insbesondere für eine orale Verwendung des Erzeugnisinhalts, erlaubt,
wobei das Aufnahmevolumen des Behältererzeugnisses für das aufzunehmende und zu bevorratende Füllgut, insbesondere in Form einer Flüssigkeit, weniger als 50 ml beträgt,
**dadurch gekennzeichnet,**
**dass** für das Verfahren geeignete Kunststoffmaterialien ausgewählt werden, die in Zusammenwirken mit dem Behälterinhalt vor und bei Ingebrauchnahme geschmacks- und/oder geruchsneutral oder im Wesentlichen geschmacks- und/oder geruchsneutral sind und auch bei längerer Lagerdauer diese Neutralität erhalten bleibt;
**dass** als Kunststoffmaterialien für die herzustellenden Erzeugnisse aromatische Polyesterpolymere und/oder Polyestercopolymere und/ oder Blends dieser Materialien verwendet werden; und
**dass** als jeweiliges aromatisches Polyesterpolymer zumindest teilweise ein Polyethylenfuranoat (PEF) oder ein Polyethylenterephthalat (PET) sowie jeweils deren Copolymere und/oder Blends verwendet wird.

2. Verfahren nach Anspruch 1, **dadurch gekennzeichnet, dass** als Verarbeitungstemperaturen für die aromatischen Polyesterpolymere Temperaturen im Bereich von 250 °C bis 280 °C und deren intrinsischen Viskositäten im Rahmen der Bearbeitung zwischen 0,6 dl/g bis 1,7 dl/g gewählt werden.

3. Verfahren nach Anspruch 1 oder 2, **dadurch gekennzeichnet, dass** der Wassergehalt des Kunststoffgranulats unmittelbar vor der Extrusion im Rahmen des Herstellverfahrens für spezifisch ausgewählte aromatische Polyesterpolymere und/oder Copolymere weniger als 50 ppm, vorzugsweise 30 ppm, gewählt wird.

4. Verfahren nach einem der vorstehenden Ansprüche, **dadurch gekennzeichnet, dass** die eingesetzten aromatischen Polyesterpolymere mit 10 % bis 80 %, vorzugsweise 30 % bis 60 %, Regenerat versetzt werden.

5. Verfahren nach einem der vorstehenden Ansprüche, **dadurch gekennzeichnet, dass** als jeweiliges aromatisches Polyesterpolymer zumindest teilweise ein
- Polyethylennaphthalat (PEN),
- Polyester und/oder Copolyester, aus Terephtalsäure hergestellt, insbesondere
- Polybutenterephthalat (PBT), bevorzugt jedoch
- glykolmodifiziertes Polyethylenterephthalat (PETG),
sowie jeweils deren Copolymere und/oder Blends verwendet wird.

6. Behältererzeugnis, insbesondere Ampullenerzeugnis, hergestellt nach einem Blasform-, Füll- und Schließverfahren nach einem der vorstehenden Ansprüche, **dadurch gekennzeichnet, dass** als Kunststoffmaterialien für die Erzeugnisse aromatische Polyesterpolymere und/oder Polyestercopolymere und/ oder Blends dieser Materialien verwendet werden; und dass als jeweiliges aromatisches Polyesterpolymer zumindest teilweise ein Polyethylenfuranoat (PEF) oder ein Polyethylenterephthalat (PET) sowie jeweils deren Copolymere und/oder Blends verwendet wird.

7. Behältererzeugnis nach Anspruch 6, **dadurch gekennzeichnet, dass** der Öffnungsquerschnitt einer jeweiligen Entnahmeöffnung (16), die beim Abtrennen eines Kopfteils (12) von einem sonstigen Erzeugniskörper (10) freigegeben wird weniger als 25 mm², bevorzugt weniger als 10 mm² beträgt.

8. Behältererzeugnis nach Anspruch 7, **dadurch gekennzeichnet, dass** die Form der Entnahmeöffnung (16) von der Kreisform abweicht, bevorzugt eine ovale oder mehreckige Geometrie aufweist.

9. Behältererzeugnis nach Anspruch 7 oder 8, **dadurch gekennzeichnet, dass** der Erzeugniskörper (10) einen nicht kreisförmigen Querschnitt, bevorzugt einen ovalen oder mehreckigen, besonders bevorzugt einen sechseckigen Querschnitt aufweist.

10. Behältererzeugnis nach einem der Ansprüche 7 bis 9, **dadurch gekennzeichnet, dass** die Entnahmeöffnung (16) mindestens einen Kanal aufweist, der einen Druckausgleich während der Entnahme des Füllgutes ermöglicht.

11. Behältererzeugnis nach Anspruch 10, **dadurch gekennzeichnet, dass** die Entnahmeöffnung (16) mindestens einen Kanal (40) aufweist, der auf einer Formtrennebene liegt.

12. Behältererzeugnis nach Anspruch 10 oder 11, **dadurch gekennzeichnet, dass** die Entnahmeöffnung (16) mindestens einen Kanal (40) aufweist, der bevorzugt einen Querschnitt aufweist, der etwa dem eines abgerundeten Dreiecks entspricht.

13. Behältererzeugnis nach einem der Ansprüche 7 bis 12, **dadurch gekennzeichnet, dass** die durchschnittliche Wandstärke im Bereich des Erzeugniskörpers (10), der für die Aufnahme des jeweiligen Füllgutes bestimmt ist, 0,2 mm bis 0,9 mm, vorzugsweise 0,3 mm bis 0,7 mm, beträgt, und dass die durchschnittliche Wandstärke an und im Bereich einer Trenn- oder Sollbruchstelle (20) weniger als 0,5 mm, bevorzugt weniger als 0,3 mm, beträgt.

14. Behältererzeugnis nach einem der Ansprüche 6 bis 13, **dadurch gekennzeichnet, dass** eine Erzeugniswand eine hohe Transparenz aufweist, die eine optische Begutachtung eines Erzeugnisinhalts ermöglicht.

## Claims

1. Blow moulding, filling and closing method for producing a filled and sealed as well as storable container product, in particular in the form of a vial product, which, formed from a plastic material, has a single-layer container or vial wall and, when the product is put into use by exposing at least one removal opening, allows the product contents to be removed, in particular for oral use,
wherein the capacity of the container product for the filling material to be held and stored, in particular in the form of a liquid, is less than 50 ml,
**characterised in that**
plastic materials which are suitable for the method are selected which, in cooperation with the container contents, are neutral in taste and/or odour or are substantially neutral in taste and/or odour before and when the product is put into use and this neutrality is also maintained over a prolonged storage period;
**in that** aromatic polyester polymers and/or polyester copolymers and/or blends of these materials are used as plastic materials for the products to be manufactured; and
**in that** a polyethylene furanoate (PEF) or a polyethylene terephthalate (PET) and copolymers and/or blends thereof are used at least in part as the respective aromatic polyester polymer.

2. Method according to Claim 1, **characterised in that** temperatures ranging from 250 °C to 280 °C and their intrinsic viscosities during processing between 0.6 dl/g to 1.7 dl/g are selected as processing temperatures for the aromatic polyester polymers.

3. Method according to Claim 1 or 2, **characterised in that** the moisture content of the plastic granules immediately before extrusion during the production process is selected to be less than 50 ppm, preferably 30 ppm, for specifically selected aromatic polyester polymers and/or copolymers.

4. Method according to one of the preceding claims, **characterised in that** 10% to 80%, preferably 30% to 60%, of regrind is added to the aromatic polyester polymers used.

5. Method according to one of the preceding claims, **characterised in that** the respective aromatic polyester polymer used is at least partially a
- polyethylene naphthalate (PEN),
- polyester and/or copolyester, produced from terephthalic acid, in particular
- polybutylene terephthalate (PBT), but preferably
- polyethylene terephthalate glycol (PETG),
and in each case their copolymers and/or blends.

6. Container product, in particular vial product, produced by a blow moulding, filling and closing method according to one of the preceding claims, **characterised in that** aromatic polyester polymers and/or polyester copolymers and/or blends of these materials are used as plastic materials for the products; and **in that** a polyethylene furanoate (PEF) or a polyethylene terephthalate (PET) and copolymers and/or blends thereof are used at least in part as the respective aromatic polyester polymer.

7. Container product according to claim 6, **characterised in that** the opening cross-section of a respective removal opening (16), which is exposed when a head part (12) is separated from an other product body (10), is less than 25 mm², preferably less than 10 mm².

8. Container product according to claim 7, **characterised in that** the shape of the removal opening (16) deviates from the circular shape, preferably having an oval or polygonal geometry.

9. Container product according to claim 7 or 8, **characterised in that** the product body (10) has a non-circular cross-section, preferably an oval or polygonal cross-section, particularly preferably a hexagonal cross-section.

10. Container product according to one of claims 7 to 9, **characterised in that** the removal opening (16) has at least one channel which allows pressure equalisation during removal of the filling material.

11. Container product according to claim 10, **characterised in that** the removal opening (16) has at least one channel (40) located on a mould parting plane.

12. Container product according to claim 10 or 11, **characterised in that** the removal opening (16) has at least one channel (40) which preferably has a cross-section that corresponds approximately to that of a rounded triangle.

13. Container product according to one of claims 7 to 12, **characterised in that** the average wall thickness in the region of the product body (10), which is intended to hold the respective filling material, is 0.2 mm to 0.9 mm, preferably 0.3 mm to 0.7 mm, and **in that** the average wall thickness at and in the region of a separation point or predetermined breaking point (20) is less than 0.5 mm, preferably less than 0.3 mm.

14. Container product according to one of claims 6 to 13, **characterised in that** a product wall has a high level of transparency enabling visual inspection of a product contents.

## Revendications

1. Procédé par moulage par soufflage, par remplissage et par fermeture de fabrication d'un produit de réservoir rempli et fermé ainsi qu'apte au stockage, notamment sous la forme d'un produit d'ampoule, qui, formé d'une matière plastique, a une paroi de récipient ou d'ampoule d'une seule couche et qui, à la mise en utilisation, permet, en dégageant au moins une ouverture de prélèvement, le prélèvement, notamment pour une utilisation orale du contenu du produit,
dans lequel le volume de réception de la charge à recevoir et à mettre en réserve dans le produit de récipient, notamment sous la forme d'un liquide, est inférieur à 50 ml,
**caractérisé**
**en ce que** l'on choisit pour le procédé des matières plastiques appropriées, qui, en coopération avec le contenu du récipient, avant et à la mise en utilisation sont neutres en goût et/ou en odeur ou sont sensiblement neutres en goût et/ou en odeur, et cette neutralité reste conservée même pendant une durée de stockage assez longue ;
**en ce que** l'on utilise comme matières plastiques pour les produits à fabriquer des polymères et/ou des copolymères de polyester aromatiques et/ou des mélanges de ces matières ;
et
**en ce que** l'on utilise comme polymère de polyester aromatique respectif, au moins en partie, un poly (furanoate d'éthylène) (PEF) ou un poly (téréphtalate d'éthylène) (PET) ainsi que leurs copolymères et/ou mélanges.

2. Procédé suivant la revendication 1, **caractérisé en ce que** l'on choisit comme températures de traitement pour les polymères de polyester aromatiques des températures dans la plage de 250°C à 280°C et leur viscosité intrinsèque dans le cadre du traitement va de 0,6 dl/g à 1,7 dl/g.

3. Procédé suivant la revendication 1 ou 2, **caractérisé en ce que** l'on choisit la teneur en eau du granulat de matière plastique, juste avant l'extrusion dans le cadre du procédé de fabrication pour des polymères et/ou des copolymères de polyester aromatiques sélectionnés spécifiquement, inférieure à 50 ppm, de préférence à 30 ppm.

4. Procédé suivant l'une des revendications précédentes, **caractérisé en ce que** l'on mélange les polymères de polyester aromatiques engagés à de 10% jusqu'à 80%, de préférence de 30% jusqu'à 60% de produit régénéré.

5. Procédé suivant l'une des revendications précédentes, **caractérisé en ce que** l'on utilise comme polymère de polyester aromatiques respectif, au moins en partie, un
- poly (naphtalate d'éthylène) (PEN),
- polyester et/ou copolyester préparé à partir d'acide téréphtalique, notamment
- poly (téréphtalate de butène) (PBT), mais de préférence
- poly (téréphtalate d'éthylène) modifié au glycol (PETG)
ainsi que leurs copolymères et/ou mélanges.

6. Produit de récipient, notamment produit d'ampoule, fabriqué par un procédé de moulage par soufflage, par remplissage et par fermeture suivant l'une des revendications précédentes, **caractérisé en ce que** sont utilisées comme matières plastiques pour les produits des polymères et/ou des copolymères de polyester aromatiques et/ou des mélanges de ces matériaux, et **en ce qu'**est utilisé comme polymère de polyester aromatique respectif, au moins en partie, un poly (furanoate d'éthylène) (PEF) ou un poly (téréphtalate d'éthylène) (PET), ainsi que leurs copolymères et/ou mélanges.

7. Produit de récipient suivant la revendication 6, **caractérisé en ce que** la section transversale d'une ouverture des ouvertures (16) de prélèvement, qui est dégagée lors de la séparation d'une partie (12) de tête du reste du corps (10) du récipient, est inférieure à 25 mm², en étant de préférence inférieure à 10 mm².

8. Produit de récipient suivant la revendication 7, **caractérisé en ce que** la forme de l'ouverture (16) de prélèvement s'écarte de la forme circulaire, en ayant de préférence une géométrie ovale ou polygonale.

9. Produit de récipient suivant la revendication 7 ou 8, **caractérisé en ce que** le corps (10) du récipient a une section transversale non circulaire, de préférence une section transversale ovale ou polygonale, d'une manière particulièrement préférée une section transversale hexagonale.

10. Produit de récipient suivant l'une des revendications 7 à 9, **caractérisé en ce que** l'ouverture (16) de prélèvement a au moins un conduit, qui rend possible une compensation de pression pendant le prélèvement de la charge.

11. Produit de récipient suivant la revendication 10, **caractérisé en ce que** l'ouverture (16) de prélèvement a au moins un conduit (40), qui se trouve sur un plan de démoulage.

12. Produit de récipient suivant la revendication 10 ou 11, **caractérisé en ce que** l'ouverture (16) de prélèvement à au moins un conduit (40), qui a de préférence une section transversale correspondant à peu près à un triangle arrondi.

13. Produit de récipient suivant l'une des revendications 7 à 12, **caractérisé en ce que** l'épaisseur de paroi moyenne dans la partie du corps (10) du récipient, qui est destinée à la réception de la charge respective, va de 0,2 mm à 0,9 mm, de préférence de 0,3 mm à 0,7 mm, et **en ce que** l'épaisseur de paroi moyenne, à et dans la partie du point (20) destiné à se rompre et à se séparer, est inférieure à 0,5 mm, en étant de préférence inférieure à 0,3 mm.

14. Produit de récipient suivant l'une des revendications 6 à 13, **caractérisé en ce qu'**une paroi du récipient à une grande transparence, qui rend possible de donner un avis visuel motivé sur le contenu du récipient.
